(19) Europäisches Patentamt
European Patent Office
Office européen des brevets

(11) **EP 2 844 916 B1**

(12) **EUROPEAN PATENT SPECIFICATION**

(45) Date of publication and mention
of the grant of the patent:
**03.04.2019 Bulletin 2019/14**

(21) Application number: **13724956.1**

(22) Date of filing: **03.05.2013**

(51) Int Cl.:
*F21V 29/60* *(2015.01)*    *F21V 29/75* *(2015.01)*
*F21V 29/74* *(2015.01)*    *F21V 29/83* *(2015.01)*
*F21K 9/232* *(2016.01)*    *F21Y 115/10* *(2016.01)*
*F21V 29/63* *(2015.01)*    *F21V 29/67* *(2015.01)*

(86) International application number:
**PCT/US2013/039513**

(87) International publication number:
**WO 2013/166417 (07.11.2013 Gazette 2013/45)**

(54) **LAMP WITH HEAT SINK AND ACTIVE COOLING DEVICE**

LAMPE MIT KÜHLKÖRPER UND AKTIVER KÜHLVORRICHTUNG

LAMPE À DISSIPATEUR DE CHALEUR ET DISPOSITIF DE REFROIDISSEMENT ACTIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.05.2012 US 201261643056 P**

(43) Date of publication of application:
**11.03.2015 Bulletin 2015/11**

(73) Proprietor: **GE Lighting Solutions, LLC
Cleveland, OH 44112-6300 (US)**

(72) Inventors:
• **KUENZIER, Glenn, Howard
East Cleveland, OH 44112-6300 (US)**
• **MARTINS, Jeremias, Anthony
East Cleveland, OH 44112-6300 (US)**
• **ROTELLA, Anthony, Michael
East Cleveland, OH 44112-6300 (US)**
• **DARBIN, Steven
Austin, TX 78735 (US)**
• **JONES, Lee
Austin, TX 78735 (US)**
• **POYNOT, Andrew
Austin, TX 78735 (US)**
• **MAHALINGHAM, Raghav
Austin, TX 78735 (US)**
• **GRIMM, Daniel
Austin, TX 78735 (US)**
• **WILLIAMS, Randall
Austin, TX 78735 (US)**
• **KELLEY, Jeffrey
Austin, TX 78735 (US)**

(74) Representative: **Coric, Dragan
General Electric Technology GmbH
Global Patent Operation - Europe
Brown Boveri Strasse 7
5400 Baden (CH)**

(56) References cited:
WO-A1-2009/071111    WO-A1-2011/089103
WO-A1-2011/159961    US-A- 5 906 429
US-A1- 2005 174 780    US-A1- 2009 109 625
US-A1- 2010 053 963    US-A1- 2011 080 096
US-A1- 2011 089 804    US-A1- 2011 162 823
US-A1- 2011 204 790    US-A1- 2011 242 816
US-A1- 2012 008 330

## Description

BACKGROUND

The subject matter of the present disclosure relates generally to a lamp having an active cooling device that provides air flow over a heat sink to cool the lamp.

Lamps based on solid state light emitting sources, such as light-emitting diode (LED)-based lamps, typically require operation at relatively low temperatures for device performance and reliability reasons. For example, the junction temperature for a typical LED device should be below 150 °C, and in some LED devices should be below 100 °C or even lower. At these low operating temperatures, the radiative heat transfer pathway to the ambient is weak compared with that of conventional light sources. In LED light sources, the convective and radiative heat transfer from the outside surface area of the lamp or luminaire can both be enhanced by the addition of a heat sink. A heat sink is a component providing a large surface for radiating and convecting heat away from the LED devices. In a typical design, the heat sink is a relatively massive metal element having a large engineered surface area, for example by having fins or other heat dissipating structures on its outer surface. The large mass of the heat sink efficiently conducts heat from the LED devices to the heat fins, and the large area of the heat fins provides efficient heat egress by radiation and convection. For high power LED-based lamps it is also known to employ active cooling using fans or heat pipes or thermoelectric coolers or pumped coolant fluid to enhance the heat removal.

However, there remains a need to devise systems for efficient removal of heat from high power LED-based lamps, for high efficiency. Prior art LED lamps with active cooling devices for forced air flow are described in WO 2011/0159961, US 2012/0008330, US 2011/0162823 and US 2009/109625.

SUMMARY

In one aspect of the invention, is provided a lamp according to claim 1. Said lamp comprises a light source comprising at least one solid state emitter. The lamp comprises a heat sink body in thermal communication with said light source. At least one air flow nozzle is present in the lamp to direct air flow across at least a portion of the heat sink body. The lamp further comprises an active cooling device, in which the active cooling device is in fluid communication with the at least one air flow nozzle and is configured to provide a flow of air to the at least one air flow nozzle. The lamp further comprises driver electronics configured to provide power to each of the light source and the active cooling device, wherein the driver electronics are remote from the active cooling device.

The description also relates to a lamp, comprising a light source comprising at least one solid state emitter and a heat sink body in thermal communication with said light source, and having at least one air flow nozzle to direct air flow across at least a portion of the heat sink body. The at least one air flow nozzle is formed as an aperture in the heat sink body. The lamp further comprises an active cooling device, wherein the active cooling device is in fluid communication with the at least one air flow nozzle and is configured to provide a flow of air to the at least one air flow nozzle. The lamp further comprises driver electronics configured to provide power to each of the light source and the active cooling device, which driver electronics may be remote from the active cooling device.

According to the invention the heat sink body further comprises a plurality of fins, wherein the plurality of fins comprise a first set of fins of a relatively greater axial length and a second set of fins of a relatively lesser axial length, wherein the axis may be generally parallel with a longitudinal axis of the lamp. The lamp further comprises at least one air flow nozzle to direct air flow across at least a portion of the heat sink body, and an active cooling device, wherein the active cooling device is in fluid communication with the at least one air flow nozzle and is configured to provide a flow of air to the at least one air flow nozzle. The lamp further comprises driver electronics configured to provide power to each of the light source and the active cooling device, and the driver electronics may be remote from the active cooling device.

The description also relates to a lamp comprising a light source comprising at least one solid state emitter, and a heat sink body in thermal communication with the light source. The heat sink body further comprises a plurality of fins, wherein a majority of the plurality of fins are in a shadow area of the lamp. The lamp comprises at least one air flow nozzle to direct air flow across at least a portion of the heat sink body, and an active cooling device, wherein the active cooling device is in fluid communication with the at least one air flow nozzle and is configured to provide a flow of air to the at least one air flow nozzle. The lamp further comprises driver electronics configured to provide power to each of the light source and the active cooling device, which driver electronics may be remote from the active cooling device.

The description also relates to a lamp comprising a light source comprising at least one solid state emitter, and a heat sink body, the heat sink body in thermal communication with the light source. The lamp further includes at least one air flow nozzle configured to direct air flow across at least a portion of the heat sink body, and an active cooling device in fluid communication with the at least one air flow nozzle, which cooling device is configured to provide a flow of air to the at least one air flow nozzle. The lamp further comprises a housing. A surface of the housing and a surface of the heat sink body form the at least one air flow nozzle. The lamp further comprises driver electronics configured to provide power to each of the light source and the active cooling device, which driver electronics may be remote from the active cooling device.

The description also relates to a lamp comprising a light source comprising at least one solid state emitter, and a heat sink body in thermal communication with the light source. The heat sink body further comprises at least one fin having two lateral sides. The lamp includes at least one air flow nozzle to direct air flow across at least a portion of the heat sink body, and an active cooling device in fluid communication with the at least one air flow nozzle. The active cooling device is configured to provide a flow of air to the at least one air flow nozzle. In operation of the lamp, air is axially directed adjacent both lateral sides of the at least one fin. The lamp further comprises driver electronics configured to provide power to each of the light source and the active cooling device, which driver electronics may be remote from the active cooling device.

BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

FIG. 1 is a perspective view of a lamp of a first specific embodiment.
FIG. 2 is a front view of a lamp of a first specific embodiment.
FIG. 3 is a top view of a lamp of a first specific embodiment.
FIG. 4 is a sectional view of a lamp of a first specific embodiment.
FIG. 5 is a sectional view of a heat sink and active cooling device of a first specific embodiment.
FIG. 6 is a sectional view of a heat sink of a first specific embodiment.
FIG. 7 is a sectional view showing cooling air flow, according to a first specific embodiment.
FIG. 8 is another a sectional view showing cooling air flow, according to a first specific embodiment.
FIG. 9 is a perspective view of a lamp of a second specific embodiment.
FIG. 10 is a cutaway view of components of a lamp of a second specific embodiment.
FIG. 11 is another cutaway view of components of a lamp of a second specific embodiment.
FIG. 12 is a transparent sectional view of components of a lamp of a second specific embodiment.
FIG. 13 is a perspective view of a lamp of a third specific embodiment.
FIG. 14 is a sectional view of a lamp of a third specific embodiment.
FIG. 15 shows air flow through a heat sink in accordance with a third specific embodiment.
FIG. 16 is a front view of a lamp in accordance with a fourth specific embodiment.
FIG. 17 is a sectional view of a lamp in accordance with a fourth specific embodiment.
FIG. 18 is a front view of a lamp in accordance with a fifth specific embodiment.
FIG. 19 is a cutaway front view of a lamp in accordance with a fifth specific embodiment.
FIG. 20 is a top transparent view of a lamp in accordance with a fifth specific embodiment.
FIG. 21 is a side closeup view of the cooperation of a fin and nozzle of a lamp in accordance with a fifth specific embodiment.
FIG. 22 is an view of the interior of a nozzle showing a diverter.
FIG. 23 is a sectional view showing air flow from a nozzle of a lamp in accordance with a fifth specific embodiment.
FIG. 24 is an exploded view of a lamp in accordance with a fifth specific embodiment.
FIG. 25 is a side view of a lamp in accordance with a sixth specific embodiment.
FIG. 26 is a transparent side view of a lamp in accordance with a sixth specific embodiment, exposing an active cooler.
FIG. 27 is a side view of a heat sink employed in a lamp in accordance with a sixth specific embodiment.
FIG. 28 is a perspective view of a heat sink employed in a lamp in accordance with a sixth specific embodiment.

DETAILED DESCRIPTION OF THE INVENTION

As noted, embodiments of the invention provide a lamp, comprising a light source comprising at least one solid state emitter, and a heat sink body in thermal communication with the light source. The lamp includes at least one air flow nozzle to direct air flow across at least a portion of said the sink body, and an active cooling device, wherein the active cooling device is in fluid communication with the at least one air flow nozzle and is configured to provide a flow of air to the at least one air flow nozzle. The lamp further includes driver electronics configured to provide power to each of the light source and the active cooling device, and the driver electronics may be remote from the active cooling device.

As used herein, the term "lamp" may be taken as being generally equivalent to any of the following alternative phraseology: "lighting device"; "lighting apparatus"; "light-emitting apparatus"; "illumination device". A "light source comprising at least one solid state emitter" typically may comprise an LED-based light engine such as an array of LED chips or dies; a "lamp" includes further components in addition to this light source, such as optical elements for distribution of emitted light, a heat sink body for thermal management, and an active cooling device for generating a flow of cooling fluid such as air. It is to be understood that "air" may be replaced by any fluid which is suitable for heat dissipation.

In accordance with embodiments of the invention, a heat sink body (and any attendant heat dissipating surface area enhancing structures, e.g., fins) may comprise one or more high thermal conductivity materials. A high conductivity material will allow more heat to move from the thermal load to ambient and result in a reduction in temperature rise of the thermal load. Exemplary materials can include metallic materials such as alloy steel, cast aluminum, extruded aluminum, and copper; or the like. Other materials can include engineered composite materials such as thermally-conductive polymers as well as plastics, plastic composites, ceramics, ceramic composite materials, nano-materials, such as carbon nanotubes (CNT) or CNT composites. Other configurations may include a plastic heat sink body comprising a thermally conductive (e.g., copper) layer disposed thereupon, such as disclosed in US Patent Publication 2011-0242816. Exemplary materials can exhibit thermal conductivities of about 50 W/m-K, from about 80 W/m-K to about 100 W/m-K, 170 W/m-K, 390 W/m-K, and from about 1 W/m-K to about 50 W/m-K, respectively. In order to maximize light output, a heat sink body and/or fin may comprise a reflective layer, such as a reflective layer which has a reflectivity for visible light of greater than about 90%. Reflective heat sinks which may be employed are those described and enabled in US Patent Publication 2012-0080699.

In accordance with embodiments of this disclosure, any heat sink body and/or heat sink fin and/or heat sink finlet may individually comprise a metallic material or generally, any material having an effective thermal conductivity. For example, a heat sink may comprise regions of differing thermal conductivity. For example, it may be attractive to seat an array of LED chips on a board, on a region (e.g., a copper slug) comprising copper metal (for its very high thermal conductivity), and the region comprising copper metal is affixed to an aluminum heat sink (for its acceptable thermal conductivity and acceptable cost).

The heat sink body of lamps in accordance with embodiment of this invention will be in thermal communication with at least the light source. This is for the purpose of transferring heat energy from the light source to the heat sink body during operation of lamp, so that the LEDs may operate efficiently. The phrase "thermal communication" generally refers to heat transfer that occurs between (or among) the two (or more) items that are in thermal communication, regardless of how the heat is transferred between or among the items (e.g., conduction, convection, radiation, or any combinations thereof, directly or indirectly). In some situations/embodiments, the majority of the heat transferred from solid state light emitters is transferred to a heat sink body by conduction; in other situations/embodiments, the majority of the heat may be transferred by convection, or a combination of conduction and convection.

In accordance with embodiments of this disclosure, the at least one active cooling device may comprise at least one of synthetic jet, fan or piezojet; or the like. As would be generally understood by persons skilled in the art, a synthetic jet typically provides an oscillating air flow which may efficiently and effectively direct relatively cooler air from the ambient, towards the proximity of a heat sink body and/or fins, so as to carry heat away from the lamp. Many synthetic jet actuators/active cooling devices which are described in Provisional Patent Application Serial Number 61/643,056 filed on May 4, 2012 may be employed.

In general, any active cooling device of the present disclosure (such as a synthetic jet or synthetic jet actuator) may be characterized by its efficiency expressed in terms of flow rate of air from the cooling device, per watt of power input to the cooling device. The flow rate of air is the volume of air displaced by the movement of the diaphragms of the cooling device, per unit time (but volume of air here typically does not include the volume of any entrained air). In accordance with some embodiments, the cooling device comprises a synthetic jet operating at less than about six cubic feet per minute (CFM) per watt. "Watts of input power" for this purpose, only refers to the power consumption of the cooling device itself, not necessarily the power required to operate a lamp as a whole. In other, narrower embodiments, a cooling device of the present disclosure may be characterized by an efficiency of less than about 4 CFM/W (e.g., 1-4 CFM/W), or less than about 2 CFM/W, or about 1 CFM/W. By configuring a cooling device for such efficiency values, one may achieve lower cost, through using fewer and/or less expensive permanent magnet(s).

Nozzles generally permit air to be alternately taken in by a synthetic jet, and then propelled from the synthetic jet, depending upon which cycle of the "breathing" mode of operation this type of active cooling device is operating. In some embodiments, at least one air flow nozzle is formed as an aperture in, or is integral to, the heat sink body. In some embodiments, at least one air flow nozzle comprises an air flow divider which is internal to the nozzle. Such air flow divider may comprise a wall effective to divide a flow of air, yet usually without creation of significant acoustic noise when air is flowing past the divider. In certain embodiments, such air flow divider comprises a blade edge or ship-hull shape.

In certain embodiments, the heat sink body may further comprise a plurality of heat dissipating surface area enhancing structures such as fins (e.g., thermal fins). These may be made of the same or different material than the heat sink body. According to the invention the plurality of heat dissipating surface area enhancing structures comprise a first set of fins of a relatively greater axial length and a second set of fins of a relatively lesser axial length. That is, if a lamp defines a generally longitudinal profile, there will be a geometric axis to the lamp, and the two respective sets of fins are disposed generally parallel to the axis. Their respective lengths measured along the axial direction, may be different, as above. Where such second set of fins are employed, they generally are disposed such that they do not block light emitted from the lamp, or are in the shadow of the lamp. That is, these shorter "finlets" may enhance heat dissipation from the lamp while minimizing obstruction of emitted light. As a general design principle, the number, size and shape, and geometric configuration of the fins in the lamp are selected to optimize high convective heat transfer with low obstruction of light when the lamp is in operation.

In some embodiments, and independent of the presence of finlets, at least some or a majority of the plurality of heat dissipating surface area enhancing structures do not block light emitted from the lamp, or are in the shadow of the lamp.

With respect to the air flow employed in many embodiments of actively cooled lamp described herein, the air flow should generally comprise a Reynolds number (as defined below) which is selected to optimize high/maximum convective cooling with low/minimum noise from the air flow. Air flow may be selected to be turbulent, laminar, or combination thereof.

According to the invention the air flow from the at least one nozzle (when the lamp is in operation), comprises a Reynolds number Re at peak air flow velocity selected to optimize high/maximum convective cooling with low/minimum noise from the air flow. The air flow from the at least one nozzle is characterized by a value for Re(d) (defined below) of from about 50 to about 800, or more narrowly, from about 100 to about 350.

Inventors of the present specification has found that specified flow parameters (such as Re) for air flowing from a nozzle in an actively cooled lamp can have important technical effects. Air flow from a nozzle with a Re value which is too high will generally result in an unacceptable acoustic noise level, while too low a value for Re typically results in insufficient cooling of an actively cooled lamp. Therefore, investigations by the present inventors have ascertained preferred parameters, described as follows.

As would be understood by the persons of ordinary skill in the art, Reynolds numbers for air can be calculated by a product of the fluid velocity (U), a characteristic length ($L_{char}$), and the inverse of a fluid kinematic viscosity (v):

$$[0054] \qquad\qquad Re=(U*L_{char})/v.$$

For an actively cooled lamp having an active cooling device (e.g., a synthetic jet), it may sometimes be convenient to determine fluid velocity U as a ratio of the volume flow rate Q for air from the synthetic jet, to the number of nozzles times the total area of the nozzle openings.

Note that for air as a cooling fluid, many relevant parameters (e.g., viscosity) are known. Thus, all that is reasonably needed to measure to obtain a Re value, is the characteristic length and the fluid velocity (U). The velocity is generally measured at the egress of the relevant nozzle. However, since the velocity of air ejected from a given nozzle may be continuously changing (e.g., in a sinusoidal manner due to the cyclic behavior of a synthetic jet), this disclosure will define peak velocity (the maximum velocity with respect to space and with respect to time) as the relevant fluid velocity U. Peak velocity can be measured by any effective means, as would be understood by the artisan of ordinary skill, including many known means such as hotwire anemometer, or by calculation.

The characteristic length ($L_{char}$) is defined as either the hydraulic diameter (d) of a given nozzle; or, alternatively, $L_{char}$ is a distance (FL) from a nozzle exit to the furthest extent of an adjacent heat dissipating structure along which the air flows after leaving the nozzle. In one example, a heat dissipating structure is a fin which is proximate to a nozzle, and so therefore, FL would be measured as a distance from the nozzle to the point of the fin (e.g., its far tip) which is most distal from the nozzle. In other examples, the heat dissipating structure may have other configurations, e.g., tubes, pins, walls, prongs, etc. Regardless, FL is distance from opening of nozzle to most distal point of the heat dissipating structure relative to the nozzle.

Note that FL is not necessarily the length of a heat dissipating structure itself; if a heat dissipating structure is spaced apart from a nozzle, FL will be the sum of the length of the heat dissipating structure and the distance of the heat dissipating structure from the nozzle. In either event, FL is a characteristic length pertaining to the distance air flow travels along a heat dissipating structure when ejected from a nozzle. Since there are two different types of characteristic lengths, there are two different Reynolds numbers which are relevant to this disclosure: Re(d) and Re(FL). The value for Re(d) is the Reynolds number using the hydraulic diameter (d) of a given nozzle as the characteristic length; and the value for Re(FL) is the Reynolds number using FL as the characteristic length.

Now that the two different types of Reynolds numbers (namely, Re(d) and Re(FL)) have been defined, certain lamp embodiments with selected values of Re(FL) are now described. Re(FL) depends upon the use of a heat dissipating surface area enhancing structure, such as a fin. Therefore, in some embodiments, the heat sink body comprises a plurality of heat dissipating surface area enhancing structures, wherein the at least one air flow nozzle is proximate to a selected heat dissipating surface area enhancing structure. In such embodiment (when the lamp is in operation), the air flow along the selected heat dissipating structure is characterized by a value for Re(FL) of from about 500 to about 13000, or more narrowly, from about 1200 to about 6400. In such embodiment, the lamp may further exhibit values (when in operation) for Re(d) of from about 50 to about 800.

Importantly, embodiments of the present invention may be capable of achieving a noise level of about 20 dBA or less (e.g., from about 16 dBA to about 20 dBA, or from about 16 dBA to about 17 dBA), when an actively cooled lamp is driven at a power of about 27 W. Noise levels are generally measured in terms of sound pressure at an observer distance of 1 meter. One technical effect for the selection of the above-noted Reynolds numbers may include these values for acoustic noise. Another technical effect may include enhanced cooling of the lamp.

In certain embodiments, the above noted ranges for Re(d) and Re(FL) are taken as being relevant to actively cooled lamps having lumen output equal to or greater than 1600 lumens and conforming to the ANSI A19 profile; however, these ranges should not be construed as limited to such type of actively cooled lamp.

In accordance with some embodiments, other measures may be taken to reduce acoustic noise. In one embodiment, the lamp may comprise a heat sink body which comprises at least one curved lower edge adapted to allow air to flow around such edge with reduced air flow noise. As a general design principle, it is preferable that air flow, especially "turned" air flow, substantially does not turn around a sharp edge; or stated differently, any turned air flow substantially always turns around a rounded edge. Therefore, in accordance with some embodiments, a flow of air to the at least one nozzle is caused to turn at an angle of 90° or greater, wherein this turned flow of air passes or traverses rounded edges or rounded surfaces. For example, a flow of air which is caused to turn at an angle of 90° or greater, only encounters a rounded surface of the lamp when it is being turned. Specifically, heat sink body and/or housing may typically be configured such that whenever air is turned (e.g., in any angle > 90°), it should be made to flow around at least some rounded edges; for example, whenever air must turn in direction around an angle of > 90°, substantially no edges which are traversed or passed are sharp edges. Although not limited by the following theory, it is believed that rounded edges contribute to reduced acoustic noise reduction by avoiding the formation of vortices. In embodiments of the disclosure, air is generally guided gently around turns; in contrast, if air is guided around sharp edges, a vortex may be created which can contribute to acoustic noise.

The driver electronics of the lamp (e.g., electronic driver(s) and controller(s) such as ASIC) typically are dedicated to driving and providing the proper electrical signals for both the one or more light sources (such as array of LED dies), and for the active cooling device. Driver electronics may typically comprise a light emitting diode (LED) power supply and a synthetic jet power supply on a single circuit board (e.g., PCB). The active cooling device may be further configured to direct an air flow for cooling the driver electronics.

In many embodiments, the driver electronics of a lamp are in a location remote from the active cooling device. For example, if an active cooling device such as a synthetic jet assembly is at least partially enclosed by a heat sink body, the driver electronics for the active cooling device may be in a separate driver housing. In other words, the heat sink body may comprise a cavity, such as an inverted cup-shaped cavity, and the active cooling device may be disposed at least partially within this cavity, but the driver electronics generally are not disposed at least partially within this cavity. In general, the active cooling device typically does not have its associated circuitry (e.g., ASIC) in the same enclosure with the active cooling device. This may have the technical effect of allowing for miniaturization of the active cooling device. A smaller active cooling device, e.g., a smaller synthetic jet assembly than those heretofore available, may allow a lamp to substantially fit within the ANSI A19 volumetric profile.

In some embodiments, a lamp may comprise a geometric configuration which substantially conforms to the ANSI A19 volumetric profile, while being configured to operate on a power level greater than 15 W of input power and possessing sufficient cooling ability for an efficiency of at least 60 LPW when the lamp is in operation. In many embodiments, a lamp of the present invention, when in operation, may be capable of providing a lumen output of 1600 lumens or greater (e.g., greater than 1700 lumens), when operating on a power level greater than 15 W (e.g., greater than 20 W) of input power. These parameters are technical features of many of the embodiments of the invention, such as those described hereinbelow. However, embodiments of the invention and the principles of its design and operation are not limited to the A19 lamp envelope. Rather, they are applicable to all suitable lamp profiles globally. Illustratively, such lamp envelopes may include: A series (e.g., A19), B series, C-7/F series, G series, P-25/PS-35 series, BR series, R series, RP-11/S series, PAR series, T series, and MR-n series.

As would be understood by persons of skill in the art, it is usual for a lamp based upon solid state light emitting sources to have a lifetime measured as "L70", which refers to a number of operational hours in which the light output of the lamp does not degrade by more than 30%. Therefore, embodiments of the present disclosure may provide an expected L70 lifetime of at least about 25000 hours, preferably up to about 50000 hours.

Typically, a lamp may include a driver housing which can be constructed e.g., from a plastic material, which facilitates the manufacture of features such as air flow nozzles, if present in this driver housing. A driver housing may be connected with a base (e.g,, an Edison base) that may include threads for connection into a conventional socket to provide electrical power to operate lamp. Other constructions may also be employed for connecting a lamp with a power source as well.

In many embodiments, the lamp may further comprise one or more optical element for distributing light. As used herein, the term "optical element" may generally refer to a combination of diffuser(s), any reflector(s), and any associated light management facility(ies) (e.g, lenses). In many embodiments, an optical element may comprise a diffuser/and or reflector. Any of the diffusers described herein, regardless of shape or construction, may exhibit a white appearance when the lamp is not operating.

Typically, the one or more optical element is configured to provide a substantially uniform omnidirectional light distribution from the lamp when the lamp is in operation. For example, such a substantially uniform omnidirectional light distribution provides illumination across a latitude span of from 0° to 135° which is uniform in intensity within about +/- 20%.

The term "omnidirectional" with respect to light distribution may be described or defined in contemporaneous Energy Star guidelines, or e.g., refers to a light distribution which varies in intensity by a value of no more than +/- about 20% from any point taken from the zenith of a lamp, to a point disposed at an angle of about 135° from the zenith . Many optical elements which are described in Provisional Patent Application Serial Number 61/643,056 filed on May 4, 2012 (the disclosure of which is incorporated herein by reference in its entirety), may be employed. Other possible optical element may be any of those which are disclosed in the following commonly owned US patent applications, each of which is hereby incorporated by reference in the entirety: US patent application serial number 13/189052, filed 22 July 2011 (GE Docket 254037); US patent application serial number 13/366767, filed 06 February 2012 (GE Docket 256707); US patent Publication 2012-0080699, published 05 April 2012 (GE Docket 245224); 2011-0169394, published 14 July 2011 (GE Docket 241019); US patent Publication 2011-0080740 , published 07 April 2011 (GE Docket 240966).

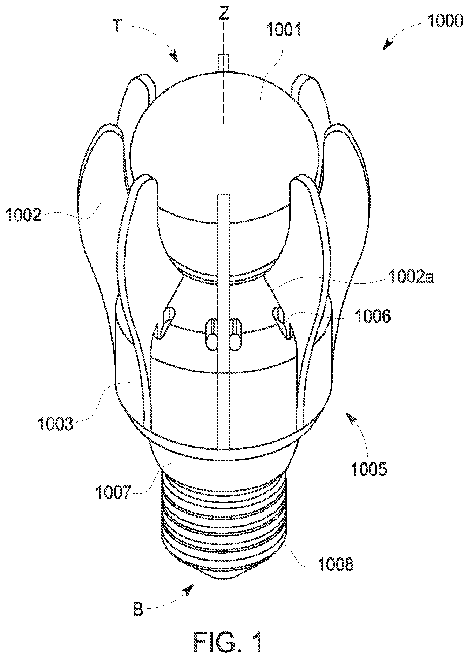

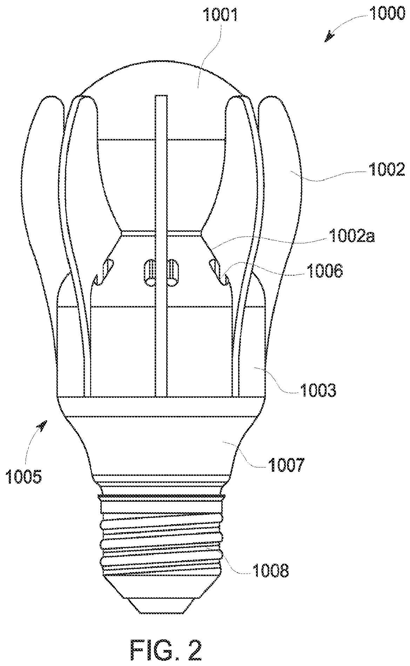

Referring now to Figures 1 and 2 , these figures refers to a first embodiment of an actively cooled lamp 1000 in accordance with this disclosure. Figure 1 is a perspective line view of the exterior of such lamp 1000, hereinbelow described from a top end T to a bottom end B. Note that the top end T and bottom end B are only used for convenience' sake, since lamp 1000 may be used in any orientation. Figure 2 is an isometric side view of such lamp 1000. Lamp 1000 is seen to comprise a diffuser 1001 of generally curvilinear outline (shown here as substantially ovoid in shape and having an axis of rotational symmetry which is parallel and/or coincident with an axis of lamp 1000; see line A--A in FIG. 1), which functions to diffuse and distribute light emitted from one or more solid state light sources (not specifically shown), such as an array of LED dies. Typically, LED devices or chips may be mounted on a circuit board, which is optionally a metal core printed circuit board (MCPCB). In many embodiments, all of the solid state light emitting sources may be inorganic light emitting diodes, although it is possible in certain embodiments to replace some or all of these with other solid state light emitting sources such as solid state lasers or organic electroluminescent devices (OLED).

A plurality of light emitting diode (LED) devices are typically selected to provide light which appears white. That, is, one or more LED chips may be selected having respective spectra and intensities that are capable of being mixed to generate white light of a desired color temperature and color rendering ability. For example, one or more LEDs may emit substantially red light, while one or more other LEDs may emit substantially green light, while one or more yet further LEDs may emit substantially blue light. There are numerous other configurations of LEDs to achieve white light which would be readily apparent to the person having skill in the art, such as configurations which employ phosphor coating either in proximity to at least one LED and/or phosphor coating remote from at least one LED. For example, a lamp may employ at least one blue LED having a YAG phosphor, or all of the LEDs in a lamp may be blue LEDs with YAG phosphor.

Elsewhere in this disclosure, the combination of a diffuser and a plurality of solid state light sources may be referred to as an "optical element", and it is to be understood that what is shown here as a diffuser 1001 is merely the exterior of an optical element. As is also described elsewhere in this disclosure, there may be also numerous other facilities (not shown here) contained within a diffuser 1001, such as reflectors, waveguides, lenses, and/or other facilities for manipulating light.

Diffuser 1001 may be capable of providing substantially "omnidirectional" light, e.g., as that term may be described in contemporaneous Energy Star guidelines, or e.g., refers to a light distribution which varies in intensity by a value of no more than +/about 20% from any point taken from the zenith Z of lamp 1000 to a point disposed at an angle of about 135° from zenith Z.

With continuing reference to Figures 1 and 2, the diffuser 1001 is generally received within a thermal management system 1005, which may comprise a heat sink having a main body 1003 and a plurality of heat radiating surface-area enhancing structures, such as fins 1002. Although eight fins 1002 are shown here, this should not be taken as limiting, as a greater or lesser number may be employed, depending upon numerous factors including one or more of: the amount of heat needed to be dissipated to the ambient; optimization of air flow from nozzles (to be described below); and/or blockage or passage of light from the diffuser 1001. Fins 1002 are generally disposed as protrusions from the body 1003 and are placed in a circumferential disposition relative to the diffuser 1001. In many lamp embodiments of this disclosure, fins are made to be substantially planar and configured to lay in constant longitude planes. This has the technical effect of minimizing the impact of the fins on the uniformity of longitudinal light intensity. In some embodiments of this disclosure, any heat dissipating surface area enhancing structure (e.g., fin) can be integral with the heat sink body, or can be attached (e.g., by adhesive, welding, bolts, screws, rivets, etc.) to it. Multiple fins may be provided as part of a unitary structure, as individual structures or as any suitable combination of unitary and combined structures.

Generally, thermal management system 1005 may comprise a material having a high thermal conductivity, such as a metal such as aluminum and/or copper. The body 1003 of such system 1005 may be cast from metal, and the fins 1002 may be welded to body 1003 or similarly cast as one piece or several pieces. In this embodiment, there may also be "finlets" (i.e., fins of lesser axial length than fins 1002) provided in an interstitial position between some or all of fins 1002. Finlets may be sized and positioned in such a manner that they are in the shadow area, i.e., they typically do not block light emission from the optical element or diffuser of the lamp.

Received within the body 1003 is an active cooling unit or active cooler or cooling device (not shown here since it is not visible from this exterior view of lamp 1001), which active cooler may comprise a synthetic jet assembly. A synthetic jet provides an oscillating air flow which may efficiently and effectively direct relatively cooler air from the ambient, towards the proximity of fins 1002, so as to carry heat away from lamp 1001. To facilitate the directing of air, a plurality of nozzles 1006 are provided in body 1003. These nozzles may be holes drilled in, or otherwise provided as through-holes in the main body 1003. The nozzles 1006 may be provided in a mid-section of the heat sink body 1003, as measured from the uppermost portion of the body 1003 to a lowermost portion, relative to zenith Z. As shown on this embodiment, each fin 1002 may have a pair of nozzles 1006 proximate to a basal edge 1002a of each fin 1002. Their function and effect will be described hereinbelow.

In this embodiment, a driver housing 1007, which may be of generally frustoconical profile, is affixed to the thermal management system 1005. Housing 1007 encloses electrical and electronic driver(s), controller(s), and associated wiring (not shown here since they are obscured by the housing 1007). The electrical and electronic driver(s) and controller(s) typically are dedicated to driving and providing the proper electrical signals for both the one or more solid state light sources (such as array of LED dies), and for the active cooler. That is, the active cooler enclosed in body 1003 typically does not have its associated circuitry (e.g., ASIC) enclosed in body 1003; its associate circuitry is rather enclosed in housing 1007 and is remote from body 1003. Finally, at bottom end B of lamp 1001 is base 1008, which may be a typical Edison-base for screwing to sockets to receive electrical current, or may be other base for receiving current, such as pins, prongs, bayonet bases or caps, bi-post, bi-pins; or the like.

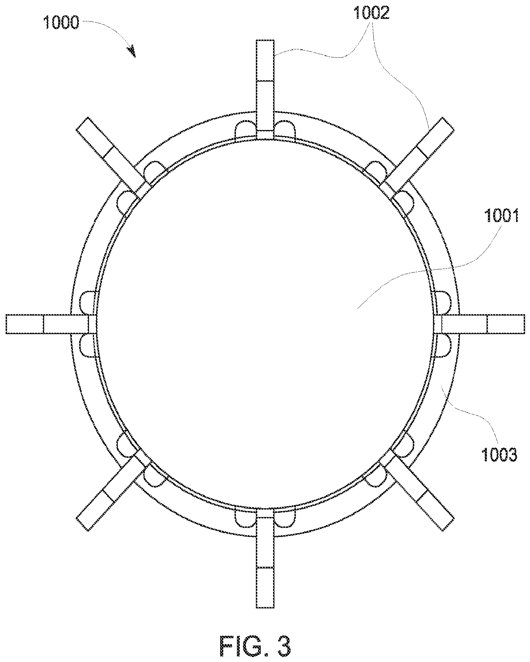

Turning now to Figure 3, is depicted a line drawing of a top view of the lamp 1000 of the first embodiment, showing view of top of diffuser 1001 from zenith Z, and fins 1002, and a ledge of body 1003.

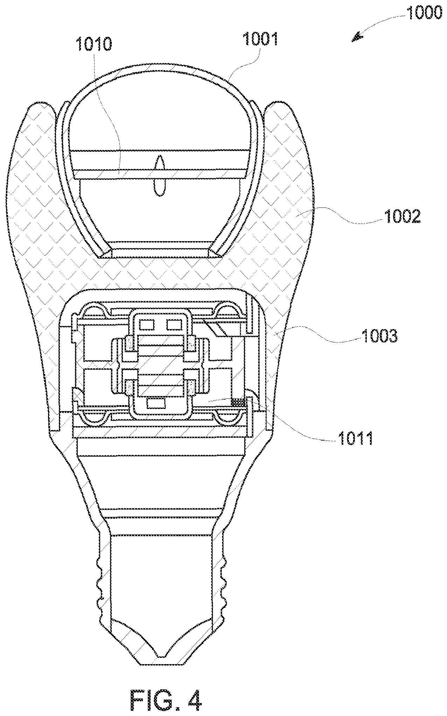

Figure 4 is intended to show a cross-sectional view of lamp 1000, to visualize the interior of diffuser 1001 and to show at least a portion of the active cooling unit 1011. The plane of cross section in Figure 4 is one which is collinear with the major axis of lamp 1000. Although the diffuser 1001 may have many configurations as described in detail elsewhere to enable substantially omnidirectional light output, in this embodiment diffuser 1001 encloses a reflector 1010. More particularly, this view shows an active cooling unit 1011 (e.g., synthetic jet) substantially enclosed in a cavity within heat sink body 1003.

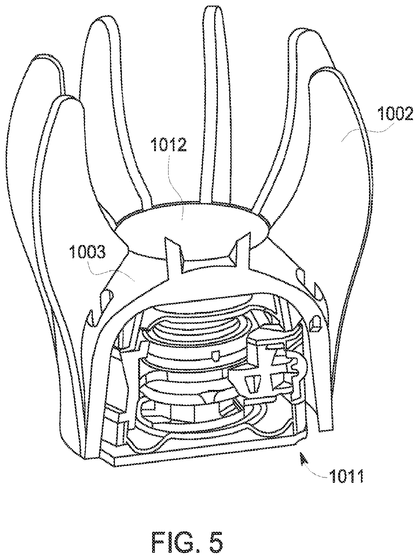

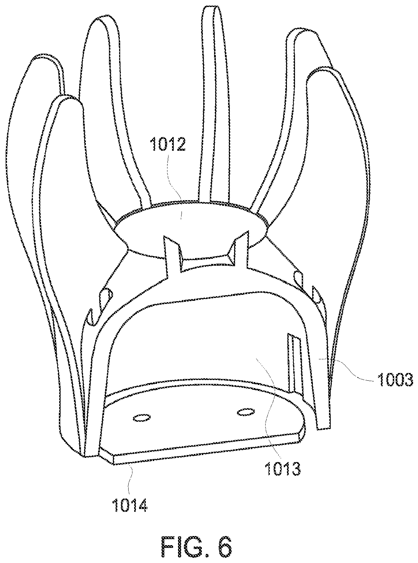

Figure 5 depicts a partial cross section view of a lamp of the first embodiment, in which all components are hidden, except for the thermal management system 1005 comprising a heat sink body 1003 and fins 1002, and active cooling unit 1011. The view of Figure 6 is intended to more clearly depict the manner in which the heat sink body 1003 is itself a "housing" for the active cooling unit 1011; that is, the active cooling unit (e.g., synthetic jet) 1011 typically does not itself have its own dedicated housing. Although not described in detail here, effective electrical wiring is received in active cooling unit 1011 from the driver electronics in housing 1007 (Figure 1). Such wiring provides current with an appropriate signal to drive the actuation of the active cooling unit 1011. Also, there exists effective electrical wiring received in active cooling unit 1011 from the driver in driver housing 1007, which then extends to the solid state light source so as to power the solid state light source (array of LED chips). Such wires may extend through the cavity which receives (or contains) the active cooling unit 1011, and typically are routed around the active cooling unit 1011 itself. In this embodiment, an array of LED chips/dies (not shown) is positioned (directly or preferably indirectly) on a substantially planar upper platform 1012 of heat sink body 1003. For example, the LED chips may be placed on a MCPCB (metal core printed circuit board), which may be affixed using a thermal paste. The array of LEDs are thus in thermal communication with the thermal management system and heat sink body 1003. Figure 6 is similar to the view of 5 except that the view of the active cooling unit 1011 is also hidden, so as to reveal the cavity 1013 within the heat sink body 1003 within which the active cooling unit 1011 is substantially enclosed. Also revealed in Figure 6 is a divider plate 1014 which separates (and, e.g., electrically insulates) the active cooling unit 1011 from the housing 1007.

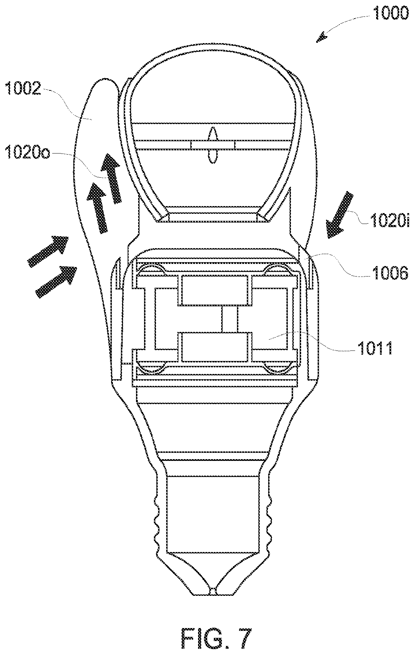

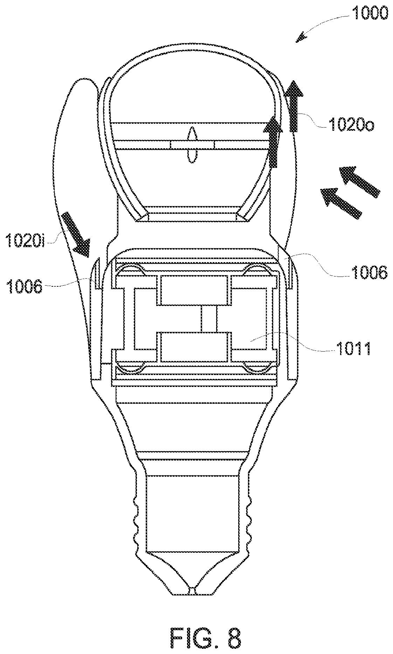

Turning now to Figures 7 and 8, these are partial depictions of lamp 1000 in a simplified cross-section, showing numerous fins removed and a simplified version of the active cooling unit 1011. These latter two Figures are intended to depict some salient features of the active cooling of the lamp when in a typical normal mode of operation. Since synthetic jets function in an oscillatory manner, drawing air in during one cycle, and then expelling air out during another cycle, any given nozzle 1006 may at one time be an intake nozzle for drawing air in, and at another time be an exhaust for jetting air out. Figure 7 shows one portion of a cycle, where air 1020i is taken in from the ambient ("i" for in) to a nozzle 1006 on a right hand side of lamp 1000; and, then from another nozzle 1006 in a different location, cooling air is jetted or expelled so as to flow generally upwards in stream 1020o (letter "o" for out). The smaller arrows generally parallel to the arrow for 1020o schematically depicts air from the ambient which is entrained along with the flow of expelled air 1020o. Therefore, based on the position of the nozzles 1006 at the basal edge 1002a (Figure 1) of fin 1002, cooling air 1020o is made to flow along essentially an entire axial length of fin 1002, so as to provide effective heat dissipation. Figure 8 shows another portion of the cycle, in which the nozzle 1006 which had expelled air, is now the intake for air 1020i, and the nozzle which previously drew air in, now expels air in a flow 1020o along the length of another fin (not shown, removed for clarity).

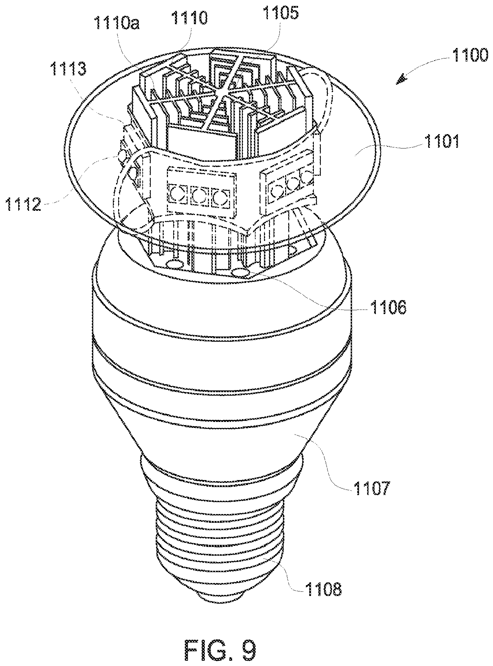

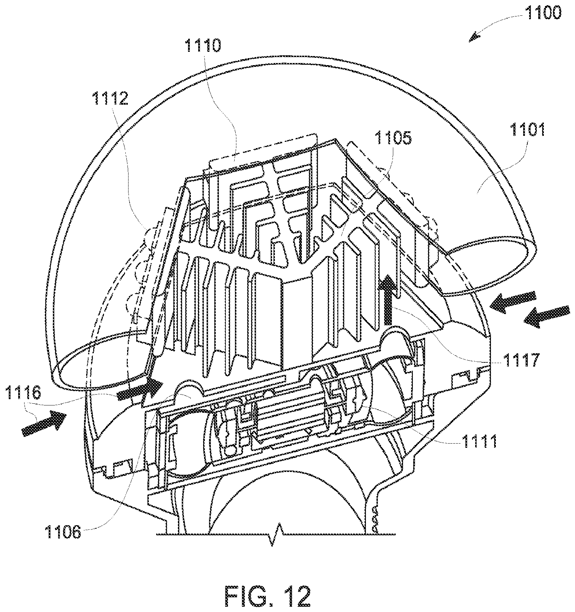

Referring now to a second embodiment of an actively cooled lamp, Figure 9 depicts a perspective external view of an actively cooled lamp 1100, characterized at least in part by a diffuser 1101 having, in this embodiment, a substantially toroidal shape with an axis parallel to a major axis of lamp 1100. This view in Figure 9 permits arrays of individual solid state light emitting elements (e.g. LED chips) 1112 to be seen for explanation's sake, although in practice the diffuser will be substantially translucent such that individual LED chips 1112 will typically not be perceptible either when the lamp is either energized or not energized. In this embodiment, diffuser 1101 at least partially encircles a heat sink body 1105, which is provided as a cast metallic barrel substantially coaxial to the major axis of lamp 1100. That is, the heat sink body 1105 is in a central position relative to a peripheral diffuser 1101. Heat sink body 1105 is shown here as having a "snowflake" cross-section, but it is to be understood that the the heat sink body may be any shape provided that it comprises channels 1110a for cooling air to flow from an active cooler (1111, Figure 12) proximate a lower axial portion of heat sink body 1105, to an upper axial portion of body 1105.

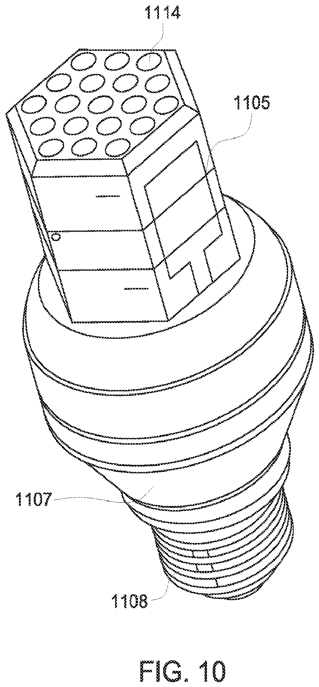

Figure 10 shows a portion of lamp with the diffuser and solid state light sources hidden. For example Figure 10 shows body 1105 as having bored or cast through holes 1114 which permit cooling air to flow from an active cooler proximate a lower axial portion of heat sink body 1105, to an upper axial portion of body 1105.

Returning to Figure 9, the channels 1110a are defined by the slats or fins 1110 which may extend radially (relative to a circle defined by toroidal diffuser 1101) from body 1105. These slats or fins 1110 are surface-area enhancing heat dissipating elements. The channels permit air ejected from nozzles 1106 to flow over substantially the entire axial length of heat sink body 1105. The lamp 1100 comprises a plurality of nozzles 1106 directed substantially axially upward (relative to a base 1108 being a "bottom" and a heat sink 1105 being a "top" of a lamp) to permit air to be passed through a plurality of channels 1110a and proximate the length of slats or fins 1110. Nozzles 1106 also permit air to be alternately taken in by an active cooler (e.g., synthetic jet, not specifically shown) and then propelled from the active cooler, depending upon which cycle of the "breathing" mode of operation the active cooler is operating.

In a similar manner to the first embodiment described above, lamp 1100 also comprises a driver housing 1107 which may enclose driver/controller electronics for both the active cooler and for the solid state light sources (e.g., LED chips 1112).

The array of LED chips 1112 depicted in Figure 9 are disposed on a lateral surface of the substantially barrel-shaped heat sink body 1105. In this embodiment, heat sink body 1105 has a polygonal cross section, and the LED chips 1112 are mounted, generally indirectly, on a planar side of this heat sink body having a polygonal cross section. For example, the LED chips may be placed on a MCPCB (metal core printed circuit board), which may be affixed using a thermal paste. Mounting may be accomplished in any effective manner provided that efficient thermal communication is established between the LED chips 1112 and the heat sink body 1105. For example, one convenient manner in which to dispose LED chips is to provide a plurality of LED chips premounted on a board 1113. Although not specifically shown here, one embodiment comprises providing a thin flexible board 1113 onto which LED chips are premounted, which may have a thickness of 0.01 inches or less, which is then wrapped around a circumferential periphery of the heat sink, akin to a rim on a wheel. Such flexible board may be adhered to the heat sink 1105 by an ultra-thin epoxy adhesive. The plurality of LED chips 1112 emit light radially in this embodiment towards the interior of the diffuser 1101, which latter element functions to re-direct light so as to provide a substantially uniform, preferably "omnidirectional" (as defined above) light radiating pattern from lamp 1100. For provision of electrical current, a base 1108 is provided, which may be a standard Edison-type screw base or any other effective manner of connecting lamp 1100 to an external source of current, such as pins or pegs.

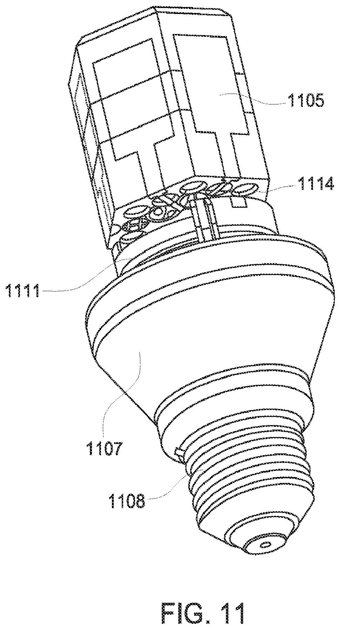

Turning now to Figure 11, a bottom perspective view of a portion of an actively cooled lamp in accordance with this second embodiment is shown, but with several elements hidden: diffuser, LED chips and board, and cover for active cooler. This view is intended to show the positioning of an active cooler (active cooling unit, synthetic jet) 1111 beneath/below a barrel-shaped heat sink body 1105 having longitudinal channels or through-holes 1114. While this view does not accurately represent the actual air flow from the active cooler 1111 into the channels 1114, it is intended to be illustrative of the source of the air flow (cooler 1111) and its position of ingress into the body of the heat sink (viz., channel 1114).

Figure 12 is a top perspective sectional view of a lamp 1100 according to this second embodiment. In this figure, the heat sink body 1105 is chosen as having the snowflake-shaped cross section, of which 1110 is one representative slat/fin, although of course the body can be any shape, preferably substantially cylindrically symmetrical. In this figure, a synthetic jet 1111 is visible. A plurality of nozzles 1106 permit cooling air to be alternately pulled in to the synthetic jet and ejected from the synthetic jet, depending on the stage in the cycle of operation of the synthetic jet. Here, an air flow into one nozzle 1106 is shown as air flow 1116 on the left side of this schematic depiction; owing to the operation of the synthetic jet, a directed air flow 1117 is directed generally upwardly from another nozzle, and then into a space between the slats 1110 of this heat sink body 1105, so as to remove heat to the ambient.

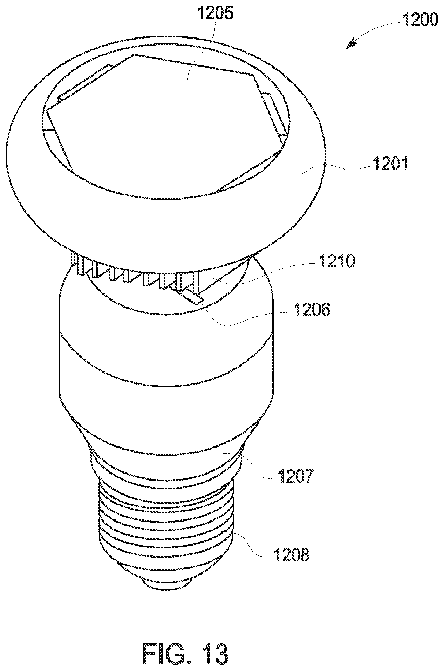

Figures 13 - 15 depict various views of a third embodiment of an actively cooled lamp 1200 in accordance with certain aspects of this disclosure. In this embodiment, actively cooled lamp 1200 is characterized, in part, by an active cooler 1211 which is in a spaced-apart relationship with a heat sink 1205, to permit a greater possibility of entrainment of air into/with air that is emitted from active cooler 1211. In particular, Figure 13 is a top perspective line-drawing view of a lamp 1200 having a heat sink body 1205 possessing a barrel-shape with a substantially polygonal or annular cross section, which has an axis parallel/coincident with a major axis of lamp 1200. It is substantially encircled at its periphery by a substantially toroidal diffuser 1201, which redirects light emitted from solid state light emitting elements such as LED dies 1212; these dies 1212 emit light within the diffuser in a substantially radially direction, which is then mixed/diffused/re-directed to give an appropriate external light emission, e.g., an omnidirectional light emission pattern. The LEDs 1212 may be placed on a flexible board which wraps a circumferential periphery of the heat sink body 1205. In this regard, this third embodiment shares similarities to the second embodiment. However, heat sink body 1205 here does not possess through holes or channels which penetrate from a bottom of a heat sink body to a top of a heat sink. Rather, in this embodiment, the heat sink may comprise slats or fins 1210 extending or protruding in a substantially downward axial direction. Slats/fins 1210 may also be replaced in part or in whole by a pin or pin forest or other heat-dissipating, surface area enhancing shapes.

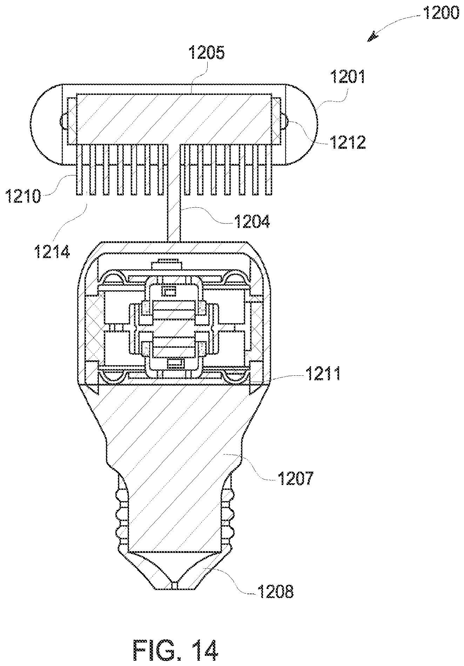

Slats or fins 1210 are better seen in cross-sectional side view Figure 14, in which pairs of the plurality of slats 1210 define radial channels 1214. This view also depicts the positioning of heat sink body 1205 on a stanchion, post, or pin 1204 so as to attain its spaced-apart relationship from active cooler 1211. Although in this view, the active cooler 1211 is shown to be a vertically positioned synthetic jet, it may also be a synthetic jet positioned in any effective orientation, or any other active cooler such as a fan or piezojet.

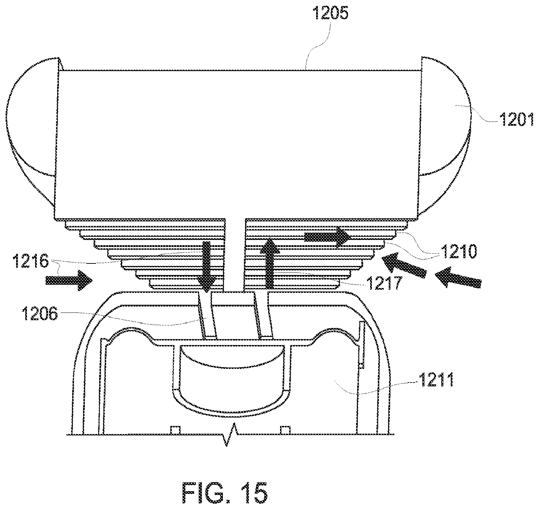

Although active cooler 1211 is generally substantially contained within an enclosure, air ejected therefrom is directed towards slats 1210 and heat sink body 1205 by passage through slots 1206. Figure 15 is a bottom perspective cutaway operational view, depicting passage of air 1217. Active cooler 1211, if operated in an oscillating mode (as would a synthetic jet), is seen to take inflowing air 1216 through one slot 1206. Substantially simultaneously, ejected air 1217 flows outward from another slot and impinges the slats/fins 1210, and may flow into the channels (1214; Figure 14) defined by slats/fins 1210. The slots are shown here as extending along a line which is substantially normal to the channels 1214, so as to enhance "air-turning" of the ejected air, as well as entrainment of ambient air which has not been ejected from active cooler 1211. However, slots above the active cooler and the channels defined by slats can be at any effective angle relative to each other, e.g., parallel.

Returning to Figure 13: driver housing 1207 may enclose electronic circuitry (not shown) for driving/controlling both the active cooler and the plurality of LED dies 1212. Current may be provided to the LED dies 1212 by extending wiring (not shown) through troughs or holes in post 1204 and body 1205. Base 1208 may be an Edison base or any other base capable of providing mains current to lamp 1200.

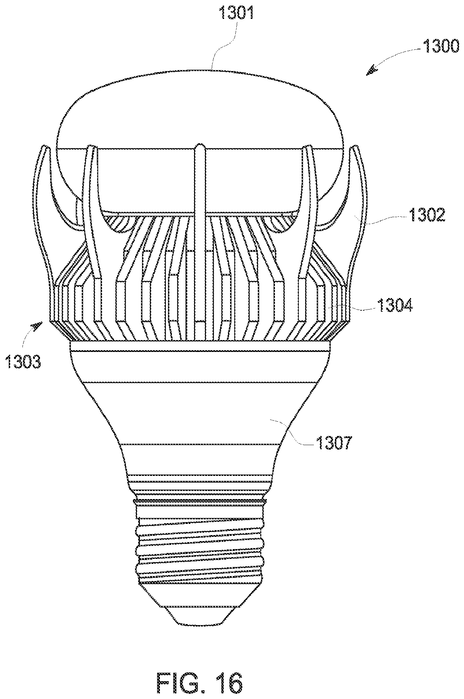

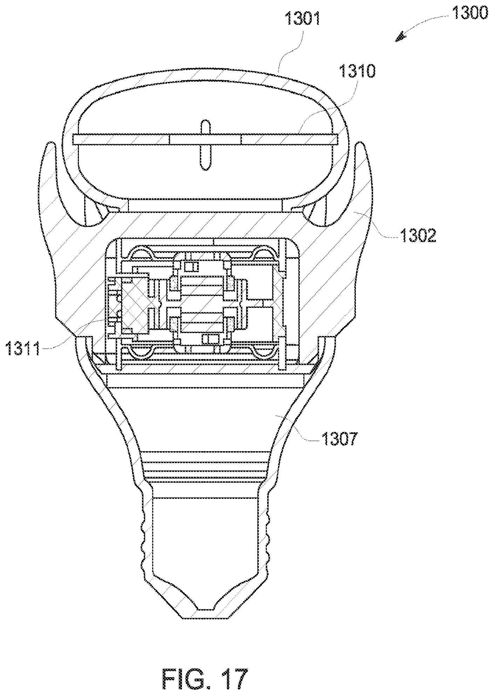

In this fourth embodiment, shown in side view in Figure 16 and cross section in Figure 17, a lamp 1300 comprises heat dissipating surface area enhancing structures of at least two types. These heat dissipating surface area enhancing structures include, in this embodiment, a plurality of fins 1302 of relatively longer axial length and a plurality of finlets 1304 of relatively shorter axial length, wherein the number of finlets is greater than the number of fins. In this embodiment, an active cooler 1311 (e.g., synthetic jet) propels cooling air out through nozzles (not shown) which comprise positions at a location proximate the axial bottom of finlets 1304. Generally, such nozzles may be formed as holes in the driver housing 1307, rather than as apertures in heat sink 1303; however, it is also possible for nozzles to be formed in any combination of apertures in the heat sink 1303 and apertures in the driver housing 1307. Generally, this embodiment exemplified a lamp wherein nozzles may eject a cooling air stream to flow along essentially the entire length of at least one heat dissipating surface area enhancing structure (e.g. a finlet 1304). In operation, the ejected cooling air stream may entrain ambient air to increase the mass flow of air which functions to cool the lamp.

The optical element 1301 (e.g., optical management system, which may comprise at least a diffuser and a reflector 1310) functions, in operation, to distribute light emitted from a plurality of solid state light sources (e.g., LED chips, not shown). The plurality of solid state light sources are positioned on an upper, outer surface of heat sink 1303, and in thermal communication therewith. The plurality of solid state light sources emit light in an generally axially upward fashion in this embodiment. Generally, this embodiment exemplifies a lamp having a majority of its heat dissipating surface area enhancing structures (e.g., fins) positioned in the shadow of the light distributed by the optical element. That is, in this embodiment, all of the finlets 1304 are sized and positioned such that they do not block light emitted from the optical element 1301, while the optical element 1301 distributes light in an omnidirectional fashion (e.g., a light distribution which varies in intensity by a value of no more than +/- 20% from any point taken from the zenith of a lamp to a point disposed at an angle of 135° from the zenith).

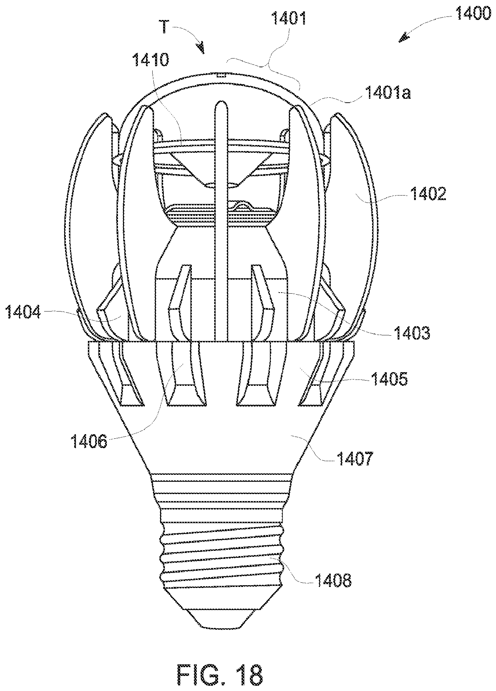

In a fifth embodiment of a lamp in accordance with this disclosure, lamp 1400 is depicted in a side view in Figure 18. In this schematic embodiment, a lamp 1400 is sized and shaped to conform essentially to the form factor of an A19 profile is provided, but it is to be understood that features of this embodiment, as well as the features of the other embodiments described in this disclosure, may independently be adapted for use in a wide variety of lamp profiles. Optical element 1401 is intended to embrace a plurality of components to manage light emitted by a plurality of solid state light emitting sources (e.g., LED chips, not shown in this view). Such optical element may comprise any configuration effective to disperse light emitted from LED chips, including many known configurations. In one embodiment, the optical element is adapted to provide a substantially "omnidirectional" distribution of light, as that term is elsewhere defined and described. Element 1401 generally comprises a dome shaped diffuser 1401a. Although generally not visible to the eye when viewed from an exterior vantage point (since diffuser 1401a may be translucent or opaque), a reflector 1410 is shown in this schematic view. Reflector 1410 may act to redirect light initially emitted in an upward axial direction, towards an obtuse angle relative to the top of the lamp. The "top" of the lamp is shown as T in this Figure 18 for convenience, but it is to be understood that the lamp may be operated or viewed from any position.

The solid state light emitting sources (e.g., LED chips or LED array, not shown here) of lamp 1400 are the main source of heat which must be dissipated to the ambient, and so therefore such solid state light emitting sources are mounted (generally in a substantially planar configuration) in thermal communication with heat sink 1403, preferably at an substantial zenith of the heat sink 1403 and disposed below an axis of reflector 1410. Extending from heat sink 1403 are a plurality of fins 1402 (e.g., thermal fins or heat dissipating surface area enhancing structures), which comprise a thin arcuate shape. The fins 1402 may be described as spaced apart from each other along a circumferential direction of the heat sink 1403. As also described elsewhere, fins are configured to facilitate the conduction of heat from the heat sink to the ambient. Although a given number of fins may be deduced from this and other figures of this embodiment, it is to be noted that the number of fins is not strictly limited.

Also protruding from heat sink 1403 are a plurality of (optional) finlets 1404, which may be defined as heat dissipating surface area enhancing structures akin to a fin, but with a lesser axial length dimension than fins 1402. That is, one may describe the pattern shown in 18 as having a plurality of relatively long fins and a plurality of relatively short fins (i.e., these being the finlets). In this embodiment, the finlets 1404 are seen to alternate circumferentially with the fins 1402, although they may coexist in any pattern or be absent. The axial dimension of fins 1402 is usually sufficient to extent from a base of heat sink 1403 to a region proximate a diffuser 1401a.

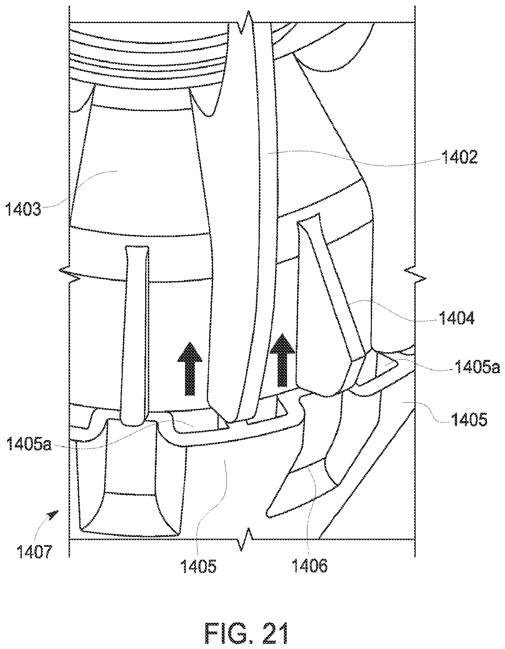

Although not visible in the view of Figure 18, an active cooling device (e.g., synthetic jet) is received within a cavity defined by an interior of heat sink 1405. The active cooler may be any known active cooler, such as a fan, but is more usually a synthetic jet. The active cooler of lamp 1400 (in operation) creates an air flow which (after appropriate diversion) is propelled to flow (at least in part) in an axial direction from a bottom lip of the heat sink 1403 along substantially the full length of at least one fin 1402 (as will be described in greater detail below in reference to Figures 21 - 23). Preferably, air flow is propelled to flow (at least in part) in an axial direction from a bottom lip of the heat sink 1403 along substantially the full axial length of the heat sink.

A housing (e.g., driver housing) 1407, which may be made at least in part of a plastic or polymeric material, is positioned below the heat sink and exists to enclose and protect driver and electronic controller circuitry (not shown) used to drive and control the solid state light source (e.g., LED chips) and the active cooler. The housing 1407 is generally of an inverted frustoconical shape, with its annular base proximate to the heat sink.

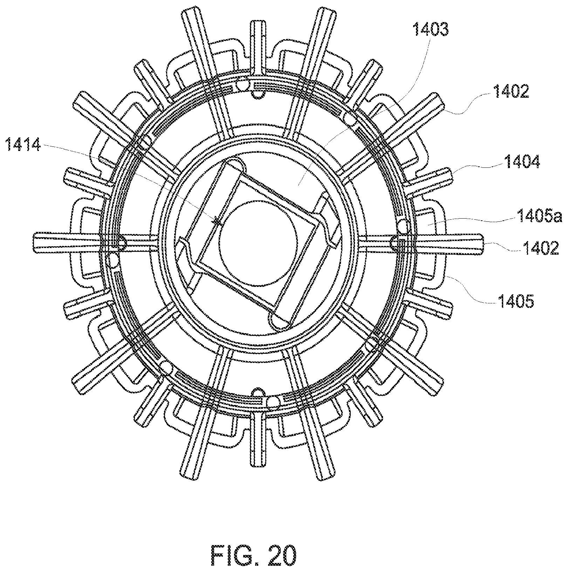

Importantly, in this embodiment, nozzles or apertures from which air may be ejected, are generally not wholly formed as holes in either heat sink 1403 or housing 1407. Rather, the nozzles may be formed as a gap created after housing 1407 and heat sink 1403 are mated, joined, or affixed. The gaps are better seen from the top view of Figure 20 as element 1405a. To facilitate the formation of gaps, the housing 1407 may comprise at least one notch 1406 in a region of the housing 1407 which is proximate to bottom of heat sink 1403, each of which notch 1406 is axially beneath a finlet 1404. The notches 1406 in the housing 1407 alternate with regular portions 1405 of the housing 1407; that is, the notches 1406 are an irregular inward deviation from the regularity of the inverted frustoconical profile of housing 1407, while the regular portions are merely the residual portion 1405 of the housing which maintains this profile. In this embodiment, each regular portion 1405 is axially beneath a fin 1402. Although not visible in this view, cooling air may flow axially along an interior surface of a regular portion 1405. Lamp 1401 is provided with mains current by a base 1408, shown here as an Edison base, although it is not limited to this type of base.

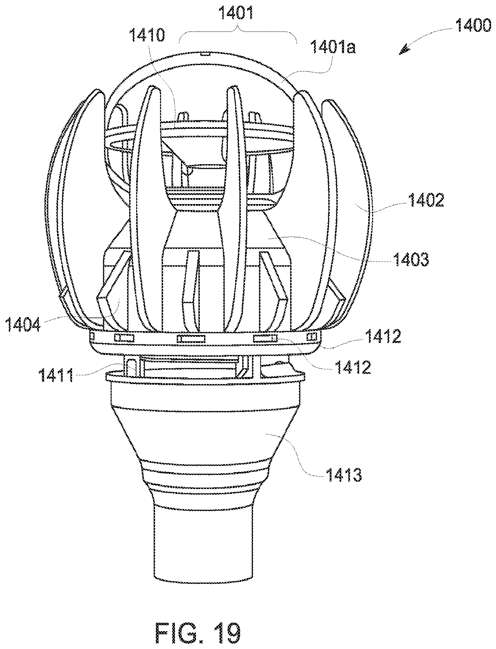

Figure 19 is a side view of a lamp 1400 with housing 1407 removed from view, so as to reveal a lower portion of an active cooler 1411. Although a majority of the active cooler 1411 along an axial length dimension may be enclosed by heat sink 1403, a small portion of active cooler may extend into an interior of housing 1407. Also revealed in this view are female apertures 1412 along a bottom rim or lip of heat sink 1403, which act to receive suitable male projections from an interior surface of housing 1407. That is, housing 1407 and heat sink 1403 generally mate (e.g., snap fit, e.g., a one way snap fit) in this embodiment, and apertures 1412 facilitate this. Of course, this disclosure is not limited to this particular manner of affixing housing 1407 to heat sink 1403, as one may contemplate other manners of affixing, including those which employ grooves, notches, friction fit, threading, screws, bolts, adhesives, or any appropriate connecting means. Finally, 1413 is a schematic depiction of a driver/controller chamber.

Figure 20 is a top view of lamp 1400, but with the optical element 1401 (i.e., including 1401a, 1410) removed.

This reveals a mounting area 1414, upon which may be mounted a plurality of solid state light emitters (e.g. LED chips; not specifically shown), generally disposed to radiate light axially upward towards top T (Figure 18). Mounting area 1414, which itself may be a planar shelf at a zenith of the heat sink 1403, is in thermal communication with heat sink 1403, so that heat sink 1403 acts as the primary intended conduit for conducting heat away from the plurality of solid state light emitters. Also visible in the top view 20 is the plurality of fins 1402 and finlets 1404, seen in axial cross section. Each fin 1402 bisects or traverses a gap 1405a which is defined by the interior surface of regular portion 1405 of the housing 1407. In operation of the lamp, cooling air (not shown) is ejected through gap 1405a (or alternately is taken into a gap 1405a and is ejected through that same gap 1405a, if the active cooler is a synthetic jet).

Figure 21 is a perspective close-up view of lamp 1400 at the juncture of the heat sink 1403 and housing 1407, showing in better detail how gaps 1405a are formed by cooperation between the bottom edge of heat sink 1403 and regular portion of housing 1407. Note that air flow is shown as axial arrows emanating in a generally upward direction, to flow (at least in part) in a pathway adjacent a side of a fin 1402. Ultimately, air is made to flow along essentially the entire axial length of fin 1402. In this embodiment, air flows generally upwards on both sides of fin 1402 from each gap 1405a. That is, when a gap 1405a is acting as a nozzle for ejected air, it may be positioned to allow air to flow in an axially upwards pathway adjacent both lateral sides of a fin 1402.

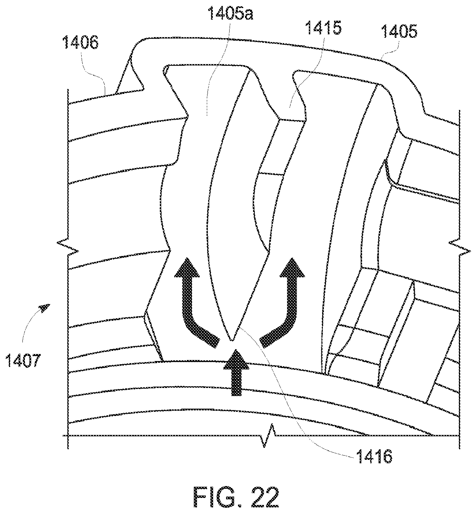

Figure 22 depicts a view of the interior contour of housing 1407 at a location adjacent to the annular "base" of the inverted frustoconical shaped housing. It is an expanded view of an interior surface of regular portion 1405 (seen from the exterior in Figures 18 and 21), as well as part of an interior surface of notch 1406. Importantly, the gap 1405a is divided at its interior into two regions by a diverter 1415, which may comprise a blade edge 1416. The bladed diverter 1415 acts (in operation) to divert air flow propelled from an active cooler into two separate streams, as air flow impinges blade edge 1416; the division of air flow is schematically depicted in Figure 22 by a single upward arrow and two angled arrows. One possible technical effect enabled by the provision of a bladed air flow diverter is to significantly reduce acoustic noise as air passes through and out from gap 1405a. In fact, such or similar bladed air flow diverter may be employed within a nozzle in any embodiments of the disclosure for the same purpose. A bladed air flow diverter may comprise plastic and/or metal.

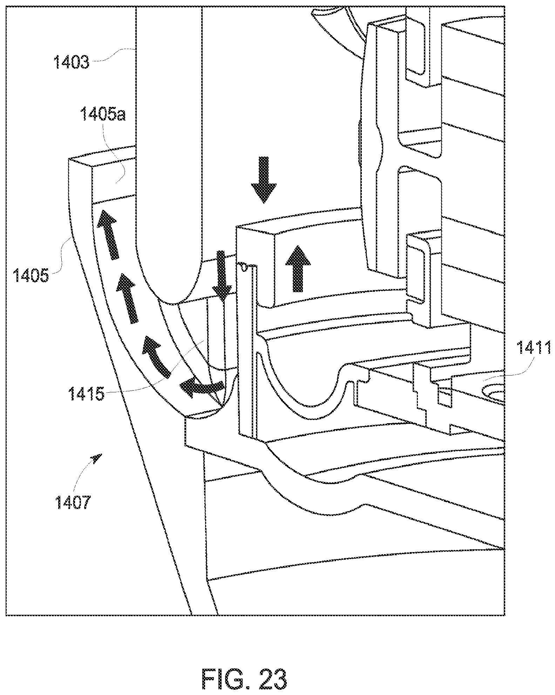

Figure 23 is a schematized view of an assembled lamp 1400 in operation, showing a region where cooling air flow is ejected from active cooler 1411 to escape through gap 1405a. Where active cooler 1411 comprises a synthetic jet, movement of diaphragms may cause air to flow around an end of a rounded lobe of heat sink 1403, impinge diverter 1415, and flow out gap 1405a. Only one size of divided gap 1405a is shown here. The rounded end of lobe of heat sink 1403 also may contribute to acoustic noise reduction when air flows around such end. Importantly, in this embodiment, at least some of the air flow emanating from synthetic jet 1411 must be turned in direction. Therefore, the heat sink and housing may typically be configured such that whenever air is turned (e.g., in any angle > 90°), it should be made to flow around at least some rounded edges; for example, whenever air must turn in direction around an angle of > 90°, substantially no edges which are traversed or passed are sharp edges. Although not limited by the following theory, it is believed that the rounded end of lobe of heat sink 1403 and other rounded edges, contribute to reduced acoustic noise reduction by avoiding the formation of vortices. In embodiments of the disclosure, air is generally guided gently around turns; in contrast, if air is guided around sharp edges, a vortex may be created which can contribute to acoustic noise.

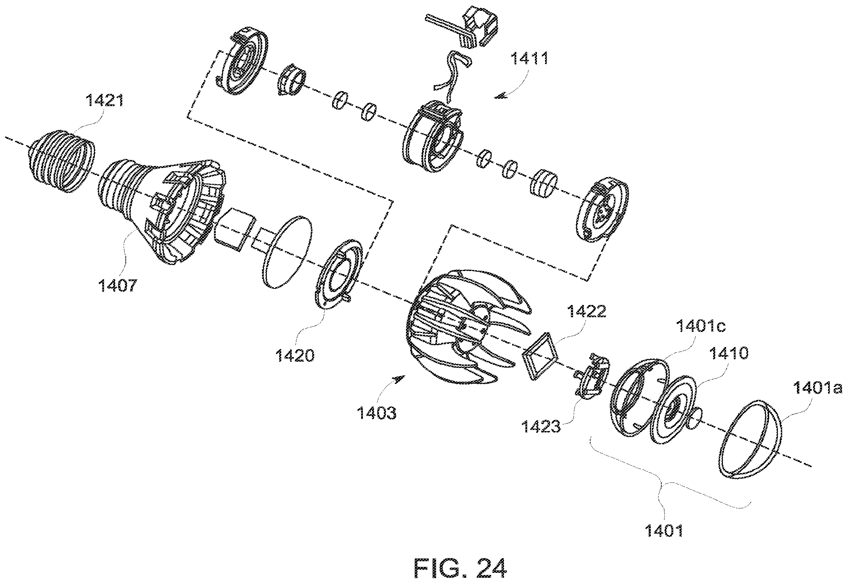

The exploded view shown in Figure 24 permits one to describe one embodiment in which lamp 1400 may be assembled. While a specific ordering is described herein, it should be understood that any effective order of assembly may be employed in this and other embodiments of actively cooled lamps of this disclosure. Generally, a mounted assembly 1422 of LED chips, e.g., on a printed circuit board is placed into thermal communication with a substantially planar shelf 1414 of heat sink 1403, and the assembly 1422 is thereafter framed by mount 1423, which holds down or otherwise fastens assembly 1422 to shelf 1414. The mount may generally comprise a thermoplastic material, and may alternatively be attached to a heat sink or shelf by a thermal process which partially melts a part of the mount. Alternatively, the mount may comprise protrusions which pass through holes in the heat sink, and the portion which passes through the holes is at least partially melted to secure the mount and the assembly of LED chips to the heat sink, without the use of screws.

In certain embodiments, any plastic material which is used to form the substantially planar shelf 1414, the mounted assembly 1422 of LED chips, and/or the mount 1423, is selected to be partially or fully specular.

The optical element 1401 may comprise a hemispherical diffuser cap (e.g., diffuser dome 1401a), which had been visible in other views in several figures described above; a reflector 1410, and a complementary hemispherical diffuser part 1401c having a bottom aperture sized and configured to encircle mount 1423. Thus, complementary hemispherical diffuser part 1401c is placed over mount 1423 so that the mounted assembly 1422 of LED chips may emit light axially upwards in operation through the bottom aperture of complementary hemispherical diffuser part 1401c; then the circumferential rim of reflector 1410 is seated on an upper rim of complementary hemispherical diffuser part 1401c, and diffuser dome 1401a is affixed to the reflector 1410 and part 1401c. The LED chips may be within the envelope of the diffuser, or may be spaced apart from the envelope of the diffuser.

After assembling synthetic jet 1411 (not described in detail here), the substantially complete synthetic jet 1411 is placed into a substantially cylindrical interior cavity (not shown) of heat sink 1403. In lamp 1400, there typically exists a divider plate 1420 to separate the synthetic jet 1411 from the electronic driver/controllers (not shown) to be enclosed by housing 1407. This divider plate 1420 is placed on a bottom end of synthetic jet 1411 after its placement into heat sink 1403. Such a divider may avoid the possibility of blowing air unnecessarily into the interior of the housing, and may contribute to preventing electrical shorts. Although not specifically shown, housing 1407 will enclose electronic driver/controllers; housing 1407 will be snap-fit or otherwise securely fastened to heat sink 1403. Item 1421 is the threading required to fasten lamp 1400 into an Edison socket.

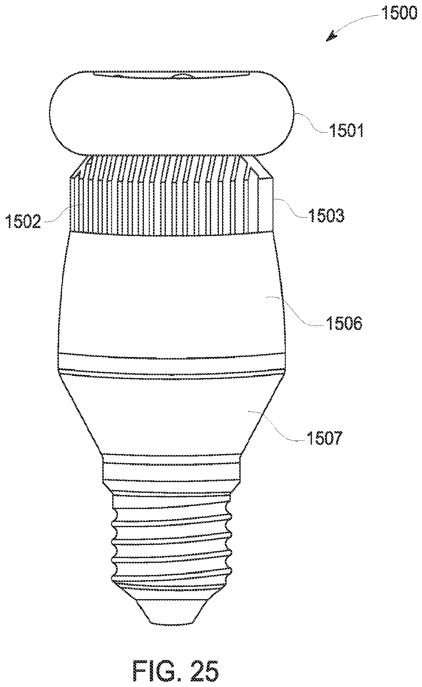

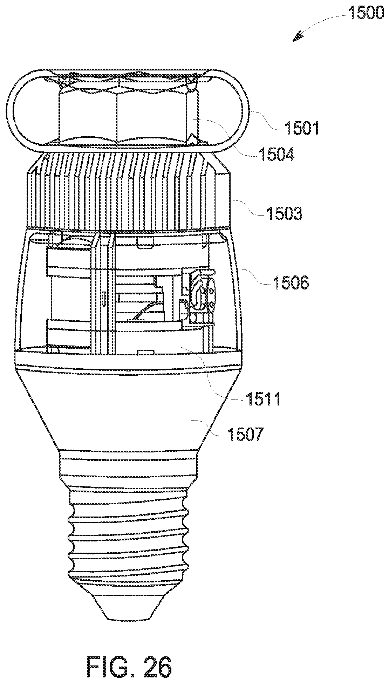

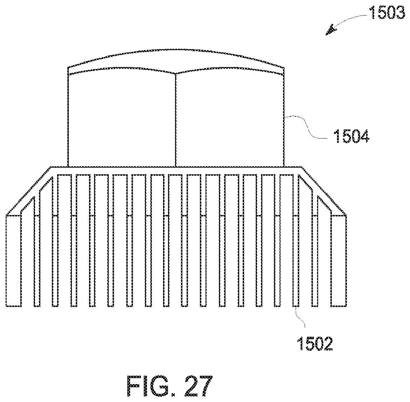

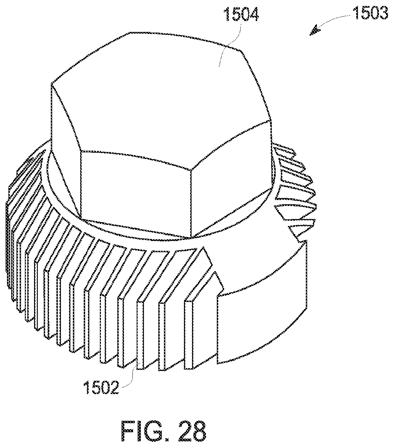

In a sixth embodiment of an actively cooled lamp, Figures 25 and 26 depict schematic side views of a lamp 1500 comprising a diffuser 1501, heat sink 1503 comprising heat dissipating surface area enhancing structures 1502, a compartment 1506 for an active cooler (such as synthetic jet 1511), and driver housing 1507. In Figure 26, diffuser 1501 is made to be transparent for purposes of the view. The heat sink 1503 comprises an upper portion 1504 with generally bolt shape and a lower portion comprising parallel slats 1502 projecting downwardly. The heat sink 1503 used in the embodiment of lamp 1500 is more clearly shown in front view and perspective view Figures 27 - 28, respectively. An outer lateral surface of upper portion 1504 supports a plurality of solid state light emitting sources (e.g., LED chips, not shown). Diffuser 1501 comprises a generally toroidal shape, with its concave inner surface being essentially hollow. Light from the plurality of solid state light emitting sources emit light radially (e.g., substantially normal to major axis of lamp 1500) to impinge upon an inner circumferential surface of diffuser 1501, and thereby be redirected. The compartment 1506 is a generally truncated cylinder, with a closure at the top for seating the heat sink 1503, and an open bottom and cavity for receiving an active cooler 1511. In Figure 26, compartment 1506 is made to appear transparent, to expose active cooler 1511. Driver housing 1507 comprises driver electronics and controllers for both the active cooler 1511 and the plurality of solid state light emitting sources.

Any of the actively cooled lamps described or suggested by embodiments of the present disclosure, may be designed as direct "plug in" components that mate with a lamp socket via: a threaded Edison base connector (sometimes referred to as an "Edison base" in the context of an incandescent light bulb); a bayonet type base connector (i.e., bayonet base in the case of an incandescent light bulb), or other standard base connector to receive standard electrical power (e.g., 110 volts A.C., 60 Hz in the United States; or 220V A.C., 50 Hz in Europe; or 12 or 24 or other d.c. voltage). Since many actively cooled lamps of this disclosure do not rely predominantly upon conduction of heat into the lamp socket via the base, actively cooled lamps of this disclosure may be used in any standard threaded light socket without concern about thermal loading of the socket or adjacent hardware.

Actively cooled lamps in accordance with embodiments of this disclosure may be particularly well suited for retrofitting higher wattage incandescent bulbs, such as incandescent bulbs in the 60 W to 100 W or higher range. In some aspects of the present disclosure, there are provided actively cooled lamps that may provide lumen output of at least 600 lumens, and in some embodiments at least 800 lumens, at least 950 lumens, at least 1300 lumens, at least 1500 lumens, at least 1700 lumens, at least 1800 lumens, or in some cases even higher lumen output. For example, certain actively cooled lamps in accordance with the present disclosure may output substantially the same lumens as a standard 100 watt tungsten filament incandescent lamp, but at a fraction of the power input (e.g., when driven at approximately 27 W).

In general, actively-cooled lamp embodiments of embodiments of the present invention are capable of simultaneously achieving all of the following parameters when in operation: (1) a lumen output of 1600 lumens or greater (e.g., greater than 1700 lumens); (2) a distribution of emitted light which is omnidirectional (e.g., illumination is provided across a latitude span of from 0° to 135° which is uniform in intensity within about +/- 20%); (3) a geometric configuration which fits within the A19 envelope (or which conforms to the ANSI A19 volumetric profile); and (4) possesses sufficient cooling ability for an efficiency of at least 60 LPW (e.g., > 65 lumens per Watt) and/or an L70 lifetime of at least about 25000 hours. Optionally, actively cooled lamps of embodiments of the present invention may also further simultaneously exhibit a correlated color temperature for light emitted from the optical element of from 2700 K to 3000 K. Optionally, actively cooled lamps of embodiments of the present invention may also further simultaneously exhibit a color rendering index for for light emitted from the optical element of greater than about 80.

Any appearance of the phrase "solid state emitter" may be taken to mean the same thing as "solid state light emitting source", and vice versa. Any appearance of "synthetic jet", without more, may be taken to mean the same thing as "synthetic jet actuator", and vice versa. Any appearance of "active cooling device" may be taken to mean the same thing as "active cooler", and vice versa. Furthermore, it is to be understood that "air" may be replaced by any fluid which is suitable for heat dissipation.

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. The modifier "about" used in connection with a quantity is inclusive of the stated value and has the meaning dictated by the context (for example, includes the degree of error associated with the measurement of the particular quantity). "Optional" or "optionally" means that the subsequently described event or circumstance may or may not occur, or that the subsequently identified material may or may not be present, and that the description includes instances where the event or circumstance occurs or where the material is present, and instances where the event or circumstance does not occur or the material is not present. The singular forms "a", "an" and "the" include plural referents unless the context clearly dictates otherwise. All ranges disclosed herein are inclusive of the recited endpoint and independently combinable. In the foregoing description, when a preferred range, such as 5 to 25 (or 5-25), is given, this means preferably at least 5 and, separately and independently, preferably not more than 25.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A lamp (1000) comprising:

   a light source (1112) comprising at least one solid state emitter;
   a heat sink body (1105) in thermal communication with said light source (1112), wherein the heat sink body (1105) further comprises a plurality of fins (1002), wherein the plurality of fins comprises a first set of fins of a relatively greater axial length and a second set of fins of a relatively lesser axial length, and wherein at least the second set of fins do not block light emitted from the lamp (1000), or are in the shadow of the lamp (1000);
   at least one air flow nozzle (1106) to direct air flow across at least a portion of said heat sink body (1105);
   an active cooling device (1011), wherein the active cooling device (1011) is in fluid communication with the at least one air flow nozzle (1106) and is configured to provide a flow of air to the at least one air flow nozzle (1106), wherein air is axially directed adjacent both lateral sides of the at least one fin; and
   driver electronics (1007) configured to provide power to each of the light source (1112) and the active cooling device (1011), and remote from the active cooling device (1011), wherein air flow from the at least one nozzle (1106), when the lamp is in operation, is **characterized by** a value for Re(d) of about 50 to about 800, (d) being the hydraulic diameter of a given nozzle.

2. The lamp (1000) in accordance with claim 1, wherein the at least one active cooling device (1011) comprises at least one of synthetic (1011) jet, fan or piezojet.

3. The lamp (1000) in accordance with any of the preceding claims, wherein the lamp (1000) further comprises one or more optical element (1001) for distributing light, wherein the one or more optical element (1001) is configured to provide a substantially uniform omnidirectional light distribution from the lamp (1000) when the lamp (1000) is in operation.

4. The lamp (1000) in accordance with any of the preceding claims, wherein the lamp (1000) comprises a geometric configuration which substantially conforms to the ANSI A19 volumetric profile.

5. The lamp (1000) in accordance with any preceding claim, wherein the heat sink body (1105) comprises a cavity, and the active cooling device (1011) is disposed at least partially within said cavity, and wherein the driver electronics (1107) are not disposed at least partially within said cavity.

6. The lamp (1000) in accordance with any preceding claim, wherein the at least one air flow nozzle (1106) is formed as an aperture in, or is integral to, the heat sink body (1105).

7. The lamp (1000) in accordance with any preceding claim, wherein the at least one air flow nozzle (1106) comprises an air flow divider (1415) internal to the nozzle.

8. The lamp (1000) in accordance with claim 7, wherein the air flow divider (1415) comprises a blade edge (1416) or ship-hull shape.

9. The lamp (1000) in accordance with any preceding claim, wherein a flow of air to the at least one nozzle is caused to turn at an angle of 90° or greater, and wherein said flow of air which is caused to traverse a rounded surface.

10. The lamp (1000) in accordance with any preceding claim, wherein the heat sink (1105) comprises a plurality of fins (1002), wherein the at least one air flow nozzle (1106) is proximate to a selected fin (1002); and
wherein, when the lamp (1000) is in operation, the air flow along the selected fin is **characterized by** a value for Re(FL) of about 500 to about 13000.

11. The lamp (1000) of any preceding claim, wherein the at least one air flow nozzle (1106) is formed as an aperture in the heat sink body (1105).


**Patentansprüche**

1. Lampe (1000), umfassend:

   eine Lichtquelle (1112), die zumindest einen Festkörperemitter umfasst;
   einen Kühlkörper (1105) in thermischer Verbindung mit der Lichtquelle (1112), wobei der Kühlkörper (1105) weiter eine Vielzahl von Rippen (1002) umfasst, wobei die Vielzahl von Rippen einen ersten Satz von Rippen mit einer relativ größeren axialen Länge und einen zweiten Satz von Rippen mit einer relativ geringeren axialen Länge umfasst, und wobei zumindest der zweite Satz von Rippen das von der Lampe (1000) emittierte Licht nicht blockiert oder sich im Schatten der Lampe (1000) befindet;
   zumindest eine Luftströmungsdüse (1106), um eine Luftströmung über zumindest einen Abschnitt des Kühlkörpers (1105) zu lenken;
   eine aktive Kühlvorrichtung (1011), wobei die aktive Kühlvorrichtung (1011) in Fluidverbindung mit der zumindest einen Luftströmungsdüse (1106) steht und konfiguriert ist, um Luftströmung zu der zumindest einen Luftströmungsdüse (1106) bereitzustellen, wobei Luft axial benachbart zu beiden lateralen Seiten der zumindest einen Rippe gerichtet ist; und
   Treiberelektronik (1007), die konfiguriert ist, um Strom zu jedem von der Lichtquelle (1112) und der aktiven Kühlvorrichtung (1011) bereitzustellen, und von der aktiven Kühlvorrichtung (1011) entfernt ist, wobei, wenn die Lampe in Betrieb ist, Luftströmung von der zumindest einen Düse (1106) durch einen Wert für Re(d) von etwa 50 bis etwa 800 gekennzeichnet ist, wobei (d) der hydraulische Durchmesser einer bestimmten Düse ist.

2. Lampe (1000) nach Anspruch 1, wobei die zumindest eine aktive Kühlvorrichtung (1011) zumindest eines von einem synthetischen (1011) Strahl, einem Gebläse oder einem Piezostrahl umfasst.

3. Lampe (1000) nach einem der vorstehenden Ansprüche, wobei die Lampe (1000) weiter ein oder mehrere optische Elemente (1001) zum Verteilen von Licht umfasst, wobei das eine oder die mehreren optischen Elemente (1001) konfiguriert sind, um eine im Wesentlichen gleichförmige ungerichtete Lichtverteilung von der Lampe (1000) bereitzustellen, wenn die Lampe (1000) in Betrieb ist.

4. Lampe (1000) nach einem der vorstehenden Ansprüche, wobei die Lampe (1000) eine geometrische Konfiguration umfasst, die im Wesentlichen dem Volumenprofil nach ANSI A19 entspricht.

5. Lampe (1000) nach einem vorstehenden Anspruch, wobei der Kühlkörper (1105) einen Hohlraum umfasst und wobei der Hohlraum (1011) zumindest teilweise innerhalb des Hohlraums angeordnet ist und wobei die Treiberelektronik (1107) nicht zumindest teilweise innerhalb des Hohlraums angeordnet ist.

6. Lampe (1000) nach einem vorstehenden Anspruch, wobei die zumindest eine Luftströmungsdüse (1106) als eine Öffnung in oder integral mit dem Kühlkörper (1105) gebildet ist.

7. Lampe (1000) nach einem vorstehenden Anspruch, wobei die zumindest eine Luftströmungsdüse (1106) einen Luftströmungsteiler (1415) innerhalb der Düse umfasst.

8. Lampe (1000) nach Anspruch 7, wobei der Luftströmungsteiler (1415) eine Blattkante (1416) oder eine Schiffsrumpfform umfasst.

9. Lampe (1000) nach einem vorstehenden Anspruch, wobei ein Luftstrom zu der zumindest einen Düse dazu veranlasst wird, sich bei einem Winkel von 90° oder größer zu drehen, und wobei der Luftstrom dazu veranlasst wird, eine abgerundete Oberfläche zu durchqueren.

10. Lampe (1000) nach einem vorstehenden Anspruch, wobei der Kühlkörper (1105) eine Vielzahl von Rippen (1002) umfasst, wobei sich die zumindest eine Luftströmungsdüse (1106) in der Nähe einer ausgewählten Rippe (1002) befindet; und
wobei, wenn die Lampe (1000) in Betrieb ist, der Luftstrom entlang der ausgewählten Rippe durch einen Wert für Re(FL) von etwa 500 bis etwa 13000 gekennzeichnet ist.

11. Lampe (1000) nach einem vorstehenden Anspruch, wobei die zumindest eine Luftströmungsdüse (1106) als eine Öffnung in dem Kühlkörper (1105) gebildet ist.


**Revendications**

1. Lampe (1000) comprenant :

une source de lumière (1112) comprenant au moins un émetteur à semiconducteurs ;
un corps de dissipateur de chaleur (1105) en communication thermique avec ladite source de lumière (1112), dans laquelle le corps de dissipateur de chaleur (1105) comprend en outre une pluralité d'ailettes (1002), dans laquelle la pluralité d'ailettes comprend un premier jeu d'ailettes d'une longueur axiale relativement plus grande et un second jeu d'ailettes d'une longueur axiale relativement plus petite, et dans laquelle au moins le second jeu d'ailettes ne bloquent pas la lumière émise par la lampe (1000), ou sont dans l'ombre de la lampe (1000) ;
au moins une buse d'écoulement d'air (1106) pour diriger un écoulement d'air à travers au moins une partie dudit corps de dissipateur de chaleur (1105) ;
un dispositif de refroidissement actif (1011), dans laquelle le dispositif de refroidissement actif (1011) est en communication fluidique avec l'au moins une buse d'écoulement d'air (1106) et est configuré pour fournir un écoulement d'air vers l'au moins une buse d'écoulement d'air (1106), dans laquelle de l'air est dirigé axialement de manière adjacente aux deux côtés latéraux de l'au moins une ailette ; et
de l'électronique de commande (1007) configurée pour alimenter chacun de la source de lumière (1112) et du dispositif de refroidissement actif (1011), et éloignée du dispositif de refroidissement actif (1011), dans laquelle l'écoulement d'air de l'au moins une buse (1106), lorsque la lampe est en fonctionnement, est **caractérisé par** une valeur pour Re(d) d'environ 50 à environ 800, (d) étant le diamètre hydraulique d'une buse donnée.

2. Lampe (1000) selon la revendication 1, dans laquelle l'au moins un dispositif de refroidissement actif (1011) comprend au moins l'un d'un jet, un ventilateur ou un piézojet synthétique (1011).

3. Lampe (1000) selon l'une quelconque des revendications précédentes, dans laquelle la lampe (1000) comprend en outre un ou plusieurs éléments optiques (1001) pour distribuer de la lumière, dans laquelle les un ou plusieurs éléments optiques (1001) sont configurés pour fournir une distribution de lumière omnidirectionnelle sensiblement uniforme par la lampe (1000) lorsque la lampe (1000) est en fonctionnement.

4. Lampe (1000) selon l'une quelconque des revendications précédentes, dans laquelle la lampe (1000) comprend une configuration géométrique qui se conforme sensiblement au profil volumétrique ANSI A19.

5. Lampe (1000) selon l'une quelconque des revendications précédentes, dans laquelle le corps de dissipateur de chaleur (1105) comprend une cavité, et le dispositif de refroidissement actif (1011) est disposé au moins partiellement dans ladite cavité, et dans laquelle l'électronique de commande (1107) n'est pas disposée au moins partiellement dans ladite cavité.

6. Lampe (1000) selon l'une quelconque des revendications précédentes, dans laquelle l'au moins une buse d'écoulement d'air (1106) est formée comme une ouverture dans le, ou faisant partie intégrante du, corps de dissipateur de chaleur (1105).

7. Lampe (1000) selon l'une quelconque des revendications précédentes, dans laquelle l'au moins une buse d'écoulement d'air (1106) comprend un diviseur d'écoulement d'air (1415) interne à la buse.

8. Lampe (1000) selon la revendication 7, dans laquelle le diviseur d'écoulement d'air (1415) comprend un bord de pale (1416) ou une forme de coque de bateau.

9. Lampe (1000) selon l'une quelconque des revendications précédentes, dans laquelle un écoulement d'air vers l'au moins une buse est amené à tourner d'un angle de 90° ou plus, et dans laquelle ledit écoulement d'air est amené à traverser une surface arrondie.

10. Lampe (1000) selon l'une quelconque des revendications précédentes, dans laquelle le dissipateur de chaleur (1105) comprend une pluralité d'ailettes (1002), dans laquelle l'au moins une buse d'écoulement d'air (1106) est proche d'une ailette (1002) sélectionnée ; et
dans laquelle, lorsque la lampe (1000) est en fonctionnement, l'écoulement d'air le long de l'ailette sélectionné est **caractérisé par** une valeur pour Re(FL) d'environ 500 à environ 13000.

11. Lampe (1000) selon l'une quelconque des revendications précédentes, dans laquelle l'au moins une buse d'écoulement d'air (1106) est formée comme une ouverture dans le corps de dissipateur de chaleur (1105).

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

EP 2 844 916 B1

FIG. 21

38

EP 2 844 916 B1

FIG. 22

39

FIG. 23

FIG. 24

FIG. 25

1500

1501

1504

1503

1506

1511

1507

FIG. 26

FIG. 27

FIG. 28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20110159961 A
- US 20120008330 A
- US 20110162823 A
- US 20090109625 A
- US 20110242816 A
- US 20120080699 A
- WO 61643056 A
- US 61643056 B
- US 18905211 A
- US 36676712 A
- US 20110169394 A
- US 20110080740 A